# EUROPEAN PATENT SPECIFICATION

(11) **EP 2 197 232 B1**
(45) Date of publication and mention of the grant of the patent: **02.08.2017**
(21) Application number: 09177779.7
(22) Date of filing: 02.12.2009
(51) Int. Cl.: H04W 52/02, H04W 48/16, H04W 88/02

(54) **Radio environment measurements in a mobile communication system**
Funkumgebungsmessungen in einem mobilen Kommunikationssystem
Mesures de l'environnement radio dans un système de communication mobile

(30) Priority: 15.12.2008 US 334576
(43) Date of publication of application: 16.06.2010
(73) Proprietor: Telefonaktiebolaget LM Ericsson (publ), 164 83 Stockholm (SE)
(72) Inventor: Nader, Ali, 21425, Malmö (SE); Krco, Srdjan, D16, DUBLIN (IE)
(74) Representative: Ericsson

(56) References cited:
- EP-A1- 1 942 688
- EP-A2- 1 396 940
- US-A- 5 799 256
- US-A1- 2008 144 580
- US-A1- 2008 176 579

## Description

### BACKGROUND

The present invention relates to mobile telecommunication systems, and more particularly to methods and apparatuses that determine when and/or what measurements user equipment (UE) in a telecommunication system will make of its surrounding environment.

Digital communication systems include time-division multiple access (TDMA) systems, such as cellular radio telephone systems that comply with the GSM telecommunication standard and its enhancements like GSM/EDGE, and Code-Division Multiple Access (CDMA) systems, such as cellular radio telephone systems that comply with the IS-95, cdma2000, and Wideband CDMA (WCDMA) telecommunication standards. Digital communication systems also include "blended" TDMA and CDMA systems, such as cellular radio telephone systems that comply with the Universal Mobile Telecommunications System (UMTS) standard, which specifies a third generation (3G) mobile system being developed by the European Telecommunications Standards Institute (ETSI) within the International Telecommunication Union's (ITU's) IMT-2000 framework. The Third Generation Partnership Project (3GPP) promulgates the UMTS standard. This application focuses on WCDMA systems for economy of explanation, but it will be understood that the principles described in this application can be implemented in other digital communication systems.

WCDMA is based on direct-sequence spread-spectrum techniques, with pseudo-noise scrambling codes and orthogonal channelization codes separating base stations and physical channels (user equipment or users), respectively, in the downlink (base-to-user equipment) direction. User Equipment (UE) communicates with the system through, for example, respective dedicated physical channels (DPCHs). WCDMA terminology is used here, but it will be appreciated that other systems have corresponding terminology. Scrambling and channelization codes and transmit power control are well known in the art.

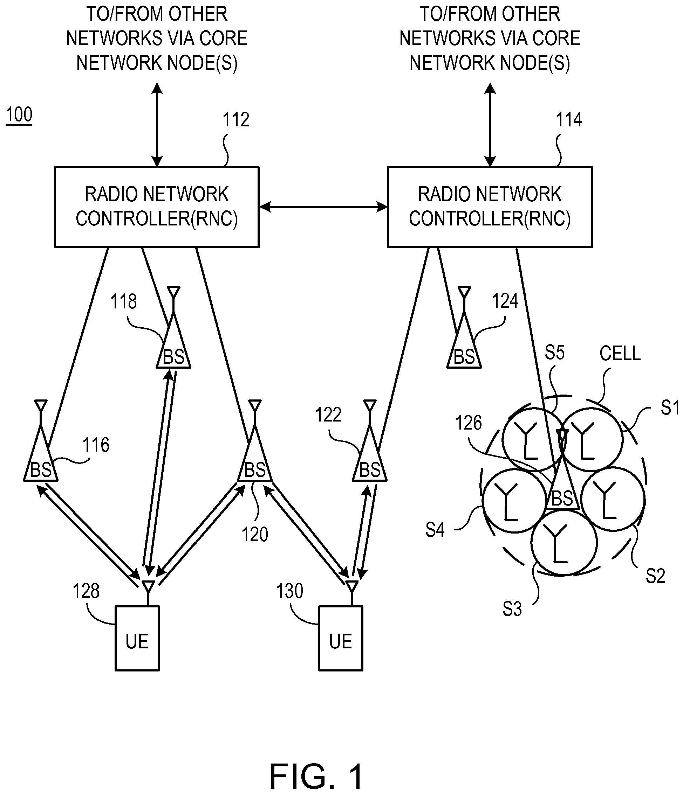

FIG. 1 depicts a mobile radio cellular telecommunication system 100, which may be, for example, a CDMA or a WCDMA communication system. Radio network controllers (RNCs) 112, 114 control various radio network functions including for example radio access bearer setup, diversity handover, and the like. More generally, each RNC directs UE calls via the appropriate base station(s) (BSs), which communicate with each other through downlink (i.e., base-to-UE or forward) and uplink (i.e., UE-to-base or reverse) channels. RNC 112 is shown coupled to BSs 116, 118, 120, and RNC 114 is shown coupled to BSs 122, 124, 126. Each BS serves a geographical area that can be divided into one or more cell(s). BS 126 is shown as having five antenna sectors S1-S5, which can be said to make up the cell of the BS 126. The BSs are coupled to their corresponding RNCs by dedicated telephone lines, optical fiber links, microwave links, and the like. Both RNCs 112, 114 are connected with external networks such as the public switched telephone network (PSTN), the Internet, and the like through one or more core network nodes like a mobile switching center (not shown) and/or a packet radio service node (not shown). In FIG. 1, UEs 128, 130 are shown communicating with plural base stations: UE 128 communicates with BSs 116, 118, 120, and UE 130 communicates with BSs 120, 122. A control link between RNCs 112, 114 permits diversity communications to/from UE 130 via BSs 120, 122.

At the UE, the modulated carrier signal (Layer 1) is processed to produce an estimate of the original information data stream intended for the receiver. The composite received baseband spread signal is commonly provided to a RAKE processor that includes a number of "fingers", or de-spreaders, that are each assigned to respective ones of selected components, such as multipath echoes or streams from different base stations, in the received signal. Each finger combines a received component with the scrambling sequence and the appropriate channelization code so as to de-spread a component of the received composite signal. The RAKE processor typically de-spreads both sent information data and pilot or training symbols that are included in the composite signal.

In cellular telecommunication systems, such as but not limited to the UMTS, there is a trade-off with respect to how often a UE should measure its surrounding environment, as well as the extent of those measurements. The more frequently a UE measures and keeps track of the surrounding environment (e.g., neighboring cells), the lower the possibility of experiencing loss of coverage, missing incoming calls, and the like, and the faster it will be able to recover from a loss of coverage. However, the more a UE actually measures, the more power it consumes. Since, more often than not, UEs are operated on battery power, higher power consumption associated with measurement activities leads to undesirable effects, such as lower standby time.

In the most common cases, the UE normally performs its measurements during its Discontinuous Reception (DRX) cycles. That is, when not being operated by its user, the UE is normally in a sleep mode, with its radio turned off. However, at such DRX cycles the UE might receive messages and hence has to turn on its radio and scan some channels. As the radio is turned on anyway, the UE might coordinate its operations so that it performs its measurements during these occasions. However, many of these measurements are unnecessary if the UE is in a stable environment (e.g. when the UE is lying still on a table) because no new information would be obtained from such measurements.

All these unnecessary measurements drain the battery power and affect the standby time of the UE.

US Patent No. 5,799,256 discloses power consumption reduction in a portable communication device by maintaining historical records of control channel and call activity. This data is used to predict calls. This permits the communication device to conserve power in the battery when no call activity is likely. The stored data is also used to predict what control channels should be scanned to search for a nearby base station. This permits the communication device to scan a reduced number of control channels and reduces the time duration ncessary for powering up the receiver of the communication device.

### SUMMARY

It should be emphasized that the terms "comprises" and "comprising", when used in this specification, are taken to specify the presence of stated features, integers, steps or components; but the use of these terms does not preclude the presence or addition of one or more other features, integers, steps, components or groups thereof. The object is solved by the features of the independent claims. The dependent claims are directed to preferred embodiments of the invention.

### BRIEF DESCRIPTION OF THE DRAWINGS

The objects and advantages of the invention will be understood by reading the following detailed description in conjunction with the drawings in which:
FIG. 1 depicts a mobile radio cellular telecommunication system 100, which may be, for example, a CDMA or a WCDMA communication system.
FIG. 2 is a block diagram of a receiver, such as a UE in a WCDMA communication system.
FIG. 3 is a state transition diagram that shows how state changes are made in accordance with an embodiment of the invention.
FIG. 4 is, in one respect, a flowchart of steps/processes carried out while the UE is in a non-static radio environment for determining whether to change operation to conform to the UE being in a static radio environment, in accordance with aspects of the invention.
FIGS. 5a-5g are, in one respect, flowcharts of steps/processes carried out while the UE is in a static radio environment, in accordance with aspects of the invention.

### DETAILED DESCRIPTION

The various features of the invention will now be described with reference to the figures, in which like parts are identified with the same reference characters.

The various aspects of the invention will now be described in greater detail in connection with a number of exemplary embodiments. To facilitate an understanding of the invention, many aspects of the invention are described in terms of sequences of actions to be performed by elements of a computer system or other hardware capable of executing programmed instructions. It will be recognized that in each of the embodiments, the various actions could be performed by specialized circuits (e.g., discrete logic gates interconnected to perform a specialized function), by program instructions being executed by one or more processors, or by a combination of both. Moreover, the invention can additionally be considered to be embodied entirely within any form of computer readable carrier, such as solid-state memory, magnetic disk, or optical disk containing an appropriate set of computer instructions that would cause a processor to carry out the techniques described herein. Thus, the various aspects of the invention may be embodied in many different forms, and all such forms are contemplated to be within the scope of the invention. For each of the various aspects of the invention, any such form of embodiments may be referred to herein as "logic configured to" perform a described action, or alternatively as "logic that" performs a described action, or alternatively as "means for" performing a described function.

In one aspect, methods and/or apparatuses operate a UE in such a way that it does not perform measurements of its surrounding environment at a high rate when it is situated in a static radio environment. In this way, the UE can avoid a needless expenditure of energy.

In another aspect, detecting whether the UE is in a static radio environment relies, at least in part, on historical data that informs whether a present state of the UE (e.g., time of day, week, month, year, and/or location) matches an earlier state that was associated with the UE being in a static radio environment. Once such static/non-static conditions are recognized, the UE may go into an appropriate one of a number of different environment monitoring states and accordingly perform measurements at a higher or lower intensity as is appropriate for the detected environment.

In brief, the invention involves the UE remembering the circumstances (e.g., when and where) in which it is usually found to be in a static or non-static radio environment. Later, whenever the UE finds itself in a same location at a same time, the static/non-static conditions can be recognized, and as a result, the UE responds by entering a corresponding one of different modes and performing measurements at higher/lower intensity. In this way, the UE is able to avoid measuring its environment at a high rate while in static environments, and can thereby save power. These and other aspects of the invention will now be described in greater detail.

The inventors have recognized that conventional technology has a problem in that it assumes that all subscribers are always moving, and hence rapid changes of radio conditions are to be expected. As a result of this assumption, frequent measurements of the surrounding environment are performed in the UE to ensure optimal utilization of the network and adequate quality of service to mobile subscribers. However, the assumption that all mobile subscribers are always moving is not a valid one. For example, a natural behavior of any human user of a UE is to be within the same area (e.g., when sleeping several hours, during office hours, during gym workouts, etc.) during the course of the day/night, resulting in a static radio environment for the user's UE. Moreover, there is an increasing number of non-human (i.e., machine) UE users that utilize telecommunication networks to interact with remote users. A very large percentage of these machines are stationary, and camp on only one base station.

Measurements performed by UEs in such static radio environments drain the battery power needlessly and detrimentally affect the standby time of the UE.

In order to facilitate a better understanding of the various aspects of the invention, the exemplary embodiments presented herein are described in the context of a WCDMA system. In this context, the cell that a UE is currently connected to (which in a WCDMA system will be the strongest cell in the vicinity) is referred to as the serving cell. It is further assumed that the various steps and processes described herein are performed during DRX cycles. Notwithstanding these contexts, it is to be understood that the embodiments described herein are merely exemplary, and are not to be construed as limiting the invention to WCDMA systems, the mentioned measured entities, or DRX modes.

The term "measured surroundings" is used throughout the description. As used herein, this term should be construed broadly to include at least any of the following:
- Measured value of the best non-serving neighboring cell.
- Average of measured values of a predetermined number of the best non-serving neighboring cells.
- Weighted average of measured values of a predetermined number of the best non-serving neighboring cells.
- Weighted sum of measured values of a predetermined number of the best non-serving neighboring cells.

As mentioned earlier, in order to enable the UE to avoid a needless expenditure of energy, it is operated in such a way that it does not perform measurements of its surrounding environment at a high rate when it is situated in a static radio environment. Detecting the static radio environment involves, at least in part, comparing the UE's present circumstances (e.g., time, location) with historical data associated with past static radio environments. For the sake of economy of explanation, the following two exemplary measurement modes (in which measurements of the surrounding area are taken at various rates) will be referred to:
- Full Rate Measurement State: In this state, measurement and cell search rates are in steady state as specified by the applicable standards (e.g., those defined by the 3GPP specifications). When entering this state from any other measurement state, the rate of cell searching increases (and can even be designed to be continuous during an initial predetermined period of time).
- Power Saving State: In this state, measurement and/or cell searches are performed at a reduced rate (compared to the Full Rate Measurement State), so that the UE is able to conserve energy. The Power Saving State can, for example be one or both of the following:
   - Limited Rate Measurement State: In this state, measurements on the serving cell are performed at the same rate as specified in the applicable standards. However, the rate of measuring the measured surroundings is lower. The rate of cell searching (which is the most power consuming activity) is also decreased by a predefined factor.
   - Low Rate Measurement State: In this state, measurements are performed only on the serving cell (an in alternative embodiments, also on the best non-serving cell) at the same rate as is specified by the applicable standards. No other measurements are performed on the measured surroundings. However, the measurement results on the surroundings just prior to entering this state are retained in a cell database so that these cells can (if still available) be found again when leaving his state.

Also for the sake of simplicity, throughout the rest of this description the focus is on movement habits of a user (human or machine) during a 24-hour day. However, the invention could just as well be applied to any type of time tracking, such as time of week, time of month, and the like. Therefore, all references to "time of day" within this document should be construed broadly to cover any of these possibilities.

The discussion will now focus on techniques and apparatuses for detecting whether the UE is in a static radio environment, and responding to that detection by requiring less frequent measurements of the UE's surrounding radio environment.

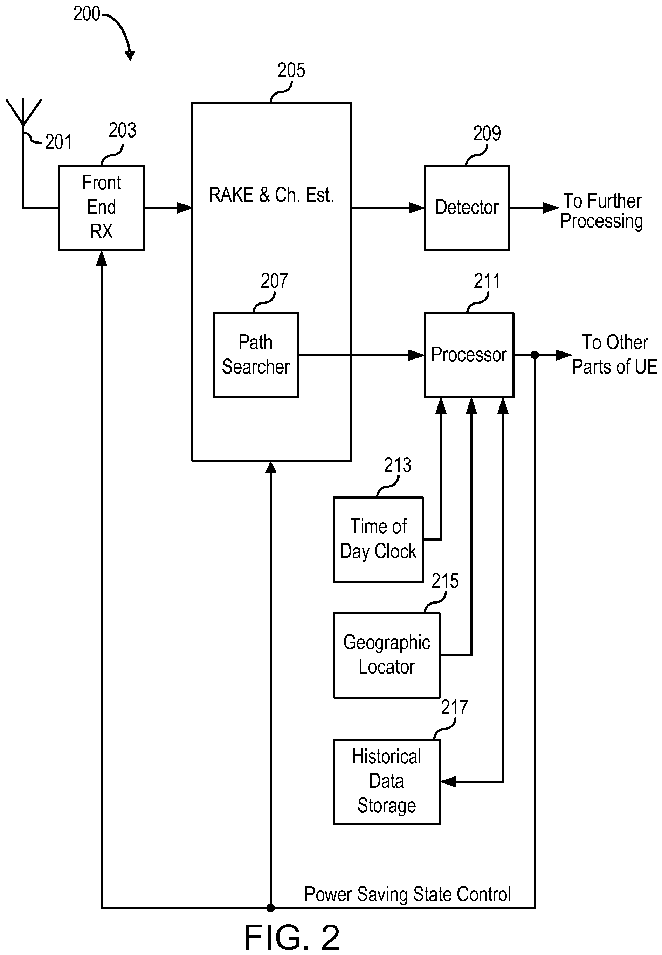

These and other aspects will now be described in greater detail. Looking first at exemplary hardware for carrying out the variously described processes, FIG. 2 is a block diagram of a receiver 200, such as a UE in a WCDMA communication system, that receives radio signals through an antenna 201 and down-converts and samples the received signals in a front-end receiver (Front End RX) 203. The output samples are fed from Fe RX 203 to a RAKE combiner and channel estimator 205 that de-spreads the received data including the pilot channel, estimates the impulse response of the radio channel, and de-spreads and combines received echoes of the received data and control symbols. In order to de-spread the received signal, the RAKE combiner and channel estimator 205 needs to know which, of the possible paths that the received signal might be spread on, are the strongest ones. In order to identify these strongest paths (experienced by the receiver 200 as delayed receipt of the signal), the RAKE combiner and channel estimator 205 includes a path searcher 207. An output of the combiner/estimator 205 is provided to a symbol detector 209 that produces information that is further processed as appropriate for the particular communication system. RAKE combining and channel estimation are well known in the art.

In exemplary embodiments, the path searcher 207 is the unit that carries out the various measurements (e.g., Received Signal Code Power --"RSCP" --, measured signal-to-noise ratio --"Ec/Io") of the measured surroundings described herein. A consequence of this is that every time the path searcher 207 is called on to perform such measurements, it is also performing a path search operation, thereby expending more power.

The various measurements described herein are supplied to a processor 211, which carries out the processes described herein. In the exemplary embodiment, the processor 211 is depicted as a unit separate and apart from other units. However, in alternative embodiments, the processor may be implemented as part of another unit, and programmed or hard-wired to perform the herein-described operations in addition to other functions. In still other alternative embodiments, two or more processors may be utilized to carry out the techniques described herein, with each processor assigned only a subset of the total number of tasks that must be executed.

The decision making performed by the processor 211 is based on information about where, when, and for how long during past times the UE has experienced a static radio environment. Accordingly, the processor 211 needs to be able to track time, geographical location, and also to detect whether the present radio environment is static or non-static. Time tracking is well-known and already implemented in most UEs currently available to the public. In this exemplary embodiment, the UE 200 includes a time of day clock 213 that provides a time of day measurement to the processor 211.

The geographical location tracked by the UE can be, for example, a GPS receiver, which provides very exact position information. However, such precision is not essential to the invention. For example, less precise position information (e.g., indicating a wide area) is usable and can be derived by any means (e.g., a GPS receiver plus/minus a certain radius, a certain cell in a cellular telecommunication network identified by a cell identity, a WLAN area, etc.). In the exemplary embodiment, geographical location information is generated and supplied to the processor 211 by a geographic locator unit 215.

Another aspect of the invention involves the UE 200 detecting that it is in a static radio environment for a period of time, and in response to that detection, storing parameters that characterize its changeable state (e.g., geographical location, time of day upon entering the static radio environment, time of day upon leaving the static radio environment). In the exemplary UE 200, this storing operation is made into a historical data storage unit 217, which can be any type of known memory device. Once the database has been built up, the UE 200 is able to use this information to confirm that it can expect to remain in a static radio environment for a sufficiently long period of time to warrant going into the Power Saving State for a period of time according to the historical information in the database. Confirmation is made by comparing the UE's present state parameters (e.g., present geographical location, present time of day) with previously-stored entries to determine whether a match has occurred. As soon as a non-static radio environment is detected, the UE returns to the Full Rate Measurement State. For example, just as the (human) user knows when and where s/he will be in a static environment during the course of a day (e.g., sleeping at home), the UE 200 is also able to learn to recognize this habitual activity. By intelligently remembering this information, the UE 200 can, in advance, be ready to utilize the existing circumstances in a manner that saves power.

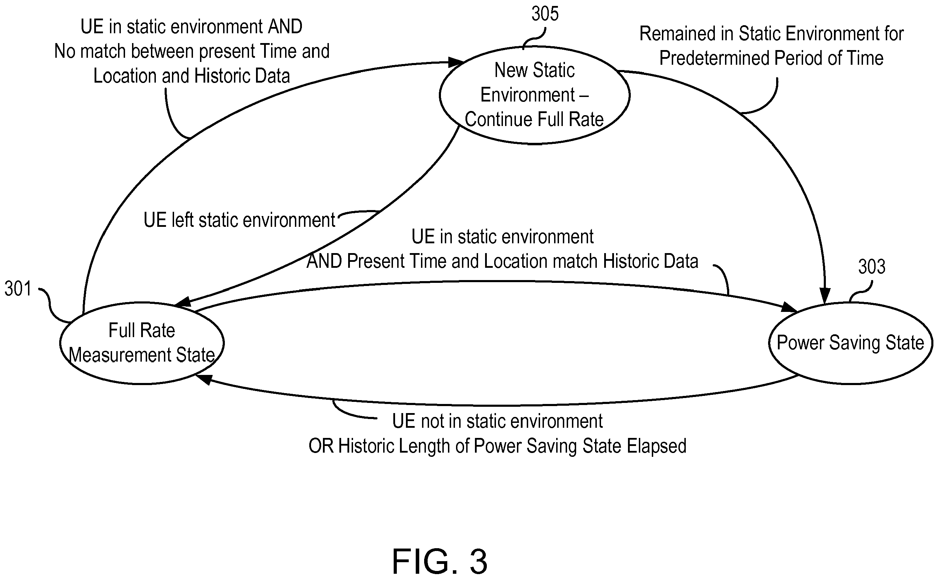

As mentioned earlier, measurement state changes are triggered based on the results of comparisons of existing measurements with certain threshold values. FIG. 3 is a state transition diagram that shows how state changes are made in accordance with an exemplary embodiment of the invention. In this embodiment, the UE operates in one of three states: a Full Rate Measurement State 301, a Power Saving State 303, and a New Static Environment State 305. Upon power up, for example, the UE may start out in Full Rate Measurement State 301. As part of its operation, the UE periodically detects whether it is in a static radio environment. Keeping track of the static/non-static environment can be implemented in any number of ways, no one of which is essential to the invention. One way, for example, is to incorporate an accelerometer in the UE. As is known, an accelerometer is an electromechanical device that measures static/constant forces (e.g., gravity) and also dynamic acceleration forces (e.g., those caused by movement). The UE can use the measurement of dynamic acceleration to ascertain whether or not it is moving. (Movement would indicate a non-static environment.) Accelerometers are being incorporated into more and more personal electronic devices such as mobile phones, media players, and handheld gaming devices.

There are other known ways of detecting whether the UE is in a static radio environment. For example, U.S. Patent Application 11/277,111 describes a technique whereby a UE can detect a static/non-static radio environment based on measurements of the surrounding environment. The UE begins operating in a power saving state by determining that a first set of predefined criteria have been satisfied. The UE leaves the power saving state by determining that a second set of predefined criteria have been satisfied. Determining that the second set of predefined criteria have been satisfied includes making a number of signal quality measurements of a signal received from a serving cell during power saving state. The UE determines which one of the plurality of signal quality measurements represents a best one of the signal quality measurements. A threshold value is determined as a function of the best one of the signal quality measurements. The second set of predefined criteria are considered to have been satisfied if a current signal quality measurement satisfies a predefined relationship with respect to the threshold value.

Another technique for detecting whether the UE is in a static environment is described in U.S. Patent Application No. 11/422,929. In that application, whether the UE is detected as being in a static radio environment is based on an analysis of trends of measured values of the serving cell compared to the measured surroundings. More particularly, a UE is operated such that it begins operating in a power saving state when a first set of predefined criteria have been satisfied, and leaves the power saving state when a second set of predefined criteria have been satisfied. Determining satisfaction of the first set of predefined criteria includes making a plurality of signal quality measurements of a signal received from a serving cell in the telecommunications system, and making a plurality of signal quality measurements of a signal received from one or more neighboring cells. A first trend line is determined from the signal quality measurements of the serving cell, and a second trend line is determined from the signal quality measurements of the one or more neighboring cells. The first set of predefined criteria are considered to have been satisfied if the first and second trend lines are not converging.

It should be understood by the reader that the term "static radio environment" does not necessarily denote a radio environment with measured values indicating a high quality channel. A UE could very well be in a poor radio environment (e.g., in a basement of a building) but the radio environment could nonetheless be static if the UE is not moving; hence, no measurements at high rate would be necessary.

As shown in FIG. 3, the UE transitions out of Full Rate Measurement State 301 only when it is detected that the UE is in a static radio environment. If this is the case, then it will change to the Power Saving State 303 if a comparison of one or more parameters that characterize a changeable state of the user equipment (e.g., time and geographic location) match historical data that has previously been stored. If the UE is in a static radio environment but there is no match with the historical data, then the UE will change to the New Static Environment State 305. In the New Static Environment State 305, the UE starts a timer which will expire after a predetermined amount of time. During this initial period, the UE continues to measure its surrounding radio environment at the full rate. If, during this period, it is detected that the UE has left the static radio environment (e.g., if movement is detected), then the UE returns to the Full Rate Measurement State 301.

However, if the UE remains in the New Static Environment State 305 until the timer expires, then the UE changes to the Power Saving State 303. As previously explained, the UE makes infrequent measurements of its surrounding radio environment (or none at all) while in the Power Saving State 303.

The UE leaves the Power Saving State 303 and returns to the Full Rate Measurement State 301 if it is detected that the UE is no longer in the static environment.

As shown in the figure, the UE can also leave the Power Saving State 303 and return to the Full Rate Measurement State 301 if the UE has been in the Power Saving State 303 for a duration that matches a duration indicated by historical data for this particular environment (i.e., even if the UE is, in fact, still in the static radio environment). This aspect is not necessarily present in all embodiments. In some embodiments, it may be acceptable to remain in the Power Saving State 303 for an indefinite period of time, regardless of the historical data. In these embodiments, it is assumed that a periodic check is made to determine whether the UE is still in the static radio environment, and that this check is made frequently enough to be relied upon to achieve good performance of the UE.

However, in some embodiments, the feature of leaving the Power Saving State 303 based entirely on historical data can be useful. For example, in some embodiments the UE may go into a very deep sleep, so that a check to determine whether the UE is still in the static radio environment is made very infrequently (e.g., 20 minutes) if the user behavior indicated a sleeping time of some number of hours. In this case, having the UE leave the Power Saving State 303 upon expiration of the historical period saves the UE having to wait possibly up to an additional twenty minutes before detecting that it is no longer in the static radio environment.

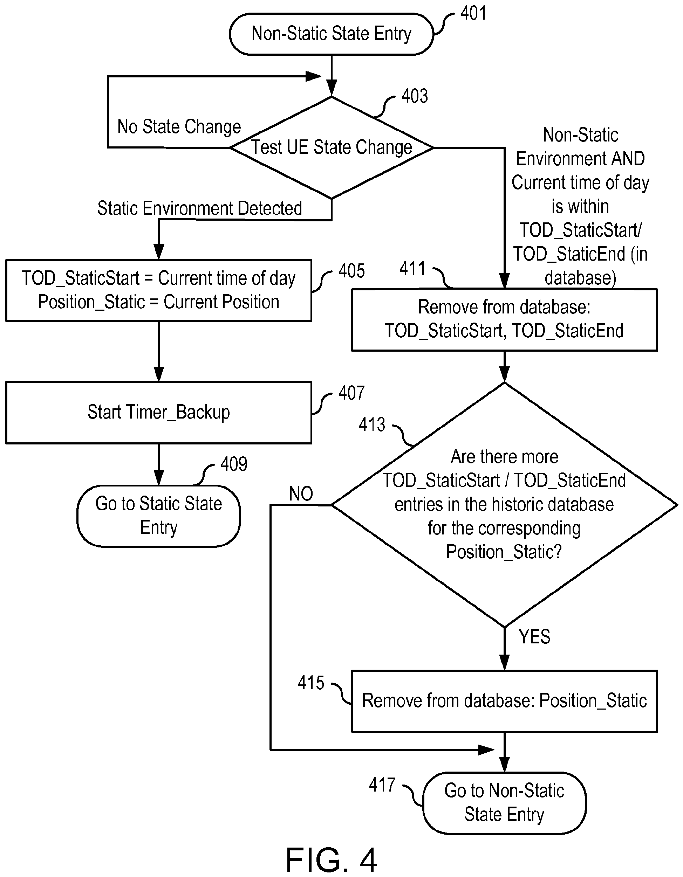

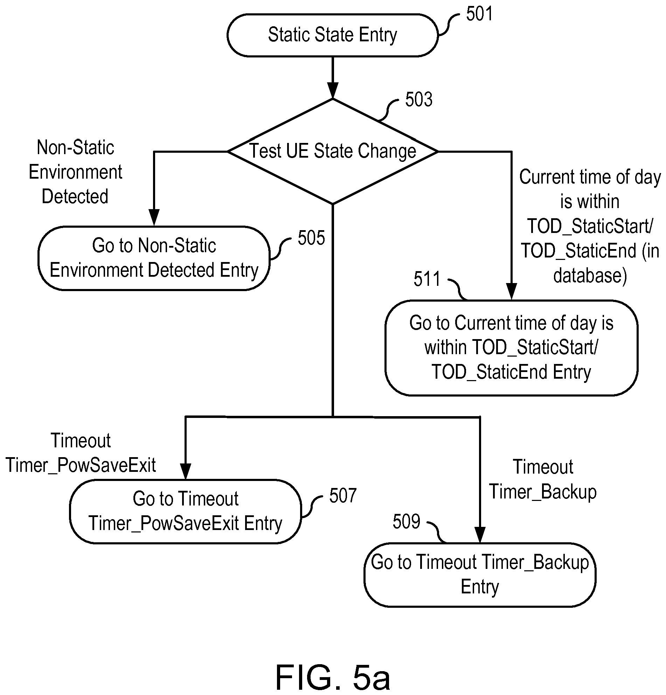

FIGS. 4 and 5a-5g illustrate, in one respect, the steps performed for carrying out various aspects of the invention in accordance with an exemplary embodiment. These steps can be embodied as, for example, a suitably configured set of program instructions being carried out by a processor such as the processor 211 illustrated in FIG. 2. In another respect, the various blocks illustrated in FIGS. 4 and 5a-5g and their interrelationships with one another can be considered to illustrate logic configured to carry out the variously described functions in accordance with an exemplary embodiment (e.g., hardwired logic circuits).

Referring first to FIG. 4, this is a flowchart of exemplary logic for determining whether to change the UE's operation from Full Rate Measurement State to Power Saving State. This logic can, for example, be activated while in the Full Rate Measurement State 301 illustrated in FIG. 3.

The logic begins at non-static state entry 401. This causes the UE to test for any state changes (decision block 403). So long as no changes are detected, processing remains in this state. If the UE detects (e.g., by means of accelerometer readings or other geographic locator logic) that it is in a static radio environment ("Static Environment Detected" path out of decision block 403) it records the time of day and current position (step 405) and starts a backup timer that will time out after a predetermined amount of time (step 407). A timeout of the backup timer will ensure that the UE will switch to a power save mode even if this is a new static environment (i.e., no historical data matches present conditions). Processing then jumps to the static state entry point (step 409) (described below).

Returning to decision block 403, if the UE detects that it is not in a static environment but present parameters (e.g., location and time of day) nonetheless match one or more entries in the historical database, this could be an indicator that the user of the UE has changed his or her habits, making the historical data no longer pertinent. Accordingly, entries relating to the present time and place are removed from the database (steps 411, 413, 415) and the UE once again begins its processing for non-static state (step 417). In order to avoid making drastic changes to the database as a result of what might be only one-time phenomena, steps 411, 413, and 415 can further include a filtering operation (not shown) that allows database entries to be removed only if they are repeatedly shown to be no longer valid.

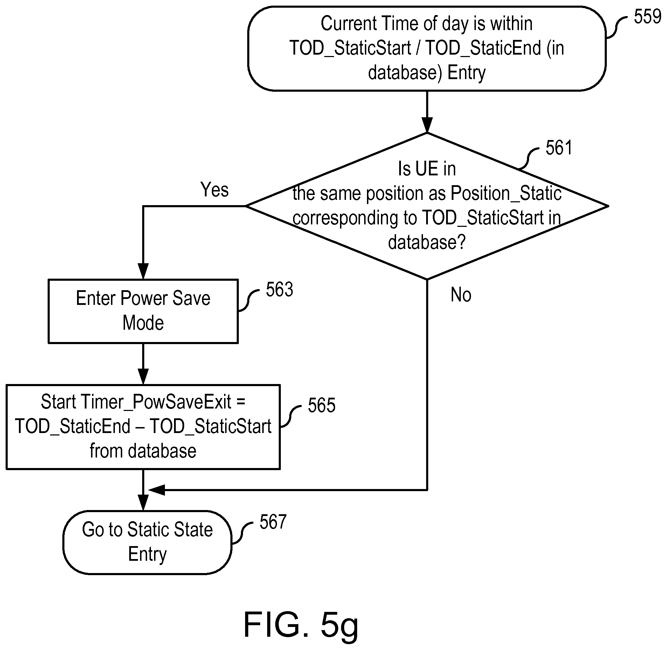

FIG. 5a illustrates the entry point processing for Static State (step 501). Here, the UE state change will cause a corresponding action to take place. State changes are detected by decision block 503. In this exemplary embodiment, database entries include the start and stop times ("TOD_StaticStart" and "TOD_StaticEnd") of when the UE entered and left, respectively, a static radio environment. If the current time of day is within the range of a period of time indicated by a database entry, then processing jumps to the corresponding entry point (step 509). FIG. 5g illustrates the processing that takes place if this jump is taken. The entry point to this processing is at step 559. Having determined that the present time of day is within a range that matches a database entry, a test is performed to determine whether the UE is in the same geographic location that corresponds to that database entry (decision block 561). If not, ("NO" path out of decision block 561) processing returns to the Static State Entry point (step 567).

If the UE is in the same geographic location that corresponds to the database entry ("YES" path out of decision block 561), then this constitutes a match between present conditions and a previously observed set of conditions corresponding to presence in a static radio environment. The UE therefore responds by entering Power Save Mode (step 563) and starting a timer ("Timer_PowSaveExit") that will time out after a period of time corresponding to a historical duration of presence in this particular static radio environment (step 565). For example, the historical duration of time can be the difference between the end and start times recorded the last time the UE was in this particular static radio environment. Following this action, processing returns to the Static State Entry point (step 567).

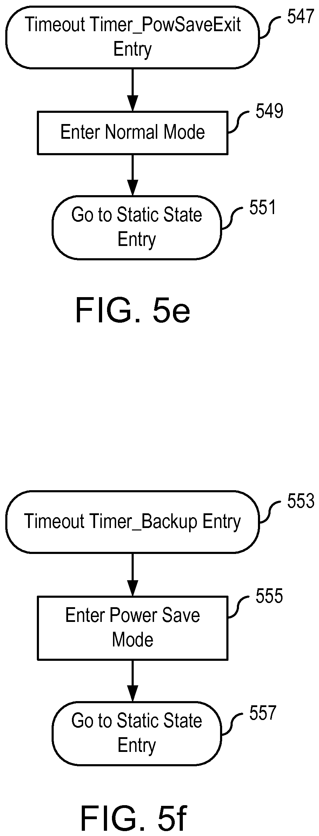

Returning now to FIG. 5a, if the UE detects that the timer "Timer_PowSaveExit" has timed out ("Timeout Timer_PowSaveExit" path out of decision block 503), processing jumps to the corresponding entry point (step 509). Referring now to FIG. 5e, processing of the "Timer_PowSaveExit" timeout event begins at step 547. That processing comprises the UE changing to a so-called "normal mode" of operation, whereby full rate measurement operations take place (step 549). The UE does not return to the non-static state, however, because the mere expiration of a timer does not mean that the UE is not still in the static radio environment. Instead, the UE once again begins processing from the entry point of the Static State mode (step 551). This enables the UE to continue keeping track of how long it remains in the static radio environment. This information can be useful for updating the historical database.

Returning once again to FIG. 4, it will be recalled that, upon detecting the existence of a static radio environment, a timer ("Timer_Backup") was started prior to proceeding to the Static State Entry point. Consequently, with reference to FIG. 5a, one of the state changes that the UE can detect is a timeout of that timer ("Timeout Timer_Backup" path out of decision block 503). Detection of this timeout event causes processing to jump to the Timeout Timer_Backup entry point (step 509).

Referring now to FIG. 5f, processing of the Timeout Timer_Backup entry point begins at step 553. It will be recalled from the discussion of FIG. 3, that if a static environment was detected but no match was found between the present parameters (e.g., time and location) and historical data (i.e., information stored in the historical database), the UE did not immediately begin operation in a power save mode, but instead delayed this until the expiration of a predetermined period of time. The timeout event associated with the Timer_Backup timer signals the expiration of the predetermined period of time. Consequently, processing involves the UE entering a power save mode of operation (step 555). Processing then jumps to the Static State entry point (step 557). Delaying entry into the Static State entry point until expiration of the Timer_Backup timer acts as a filter that enables the UE to avoid changing modes due only to transient phenomena.

Referring again to FIG. 5a, at some point the UE will likely detect that it is no longer in a static radio environment, and has instead entered a non-static environment ("Non-Static Environment Detected" path out of decision block 503). The UE responds to this detection by jumping to a Non-Static Environment Detected entry point (step 505).

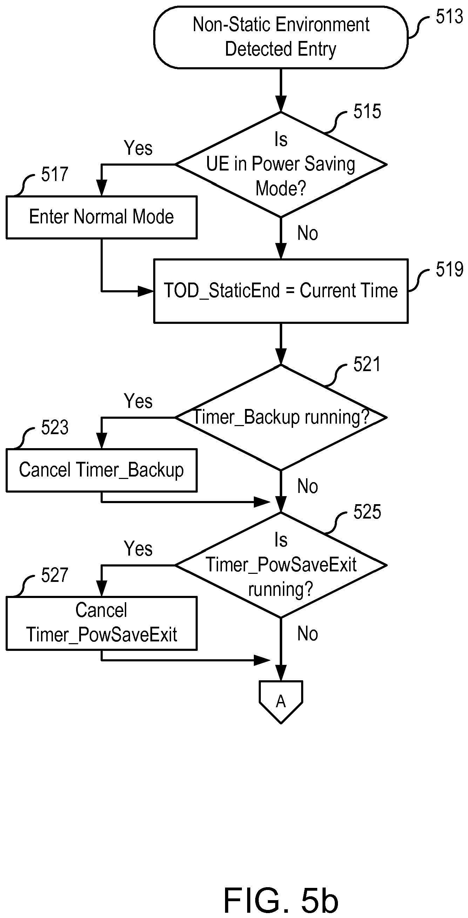

Referring now to FIG. 5b, processing for Non-Static Environment Detected begins at step 513. The purpose of this processing is to facilitate an orderly transition from static environment state processing to non-static environment state processing. Accordingly, one operation that is performed is to determine whether the UE is operating in a power save mode (decision block 515). If so ("YES" path out of decision block 515), the UE changes to the normal mode of operation (step 517).

Regardless of the outcome of decision block 515, another operation is to temporarily preserve the current time, which is the time of day that the UE left the static radio environment (step 519). Whether this data will be recorded in the historical database for future use is determined by further processing (described below).

Other operations performed include stopping the Timer_Backup timer if it is running (decision block 521 and step 523) and stopping the Timer_PowSaveExit timer if it is running (decision block 525 and step 527).

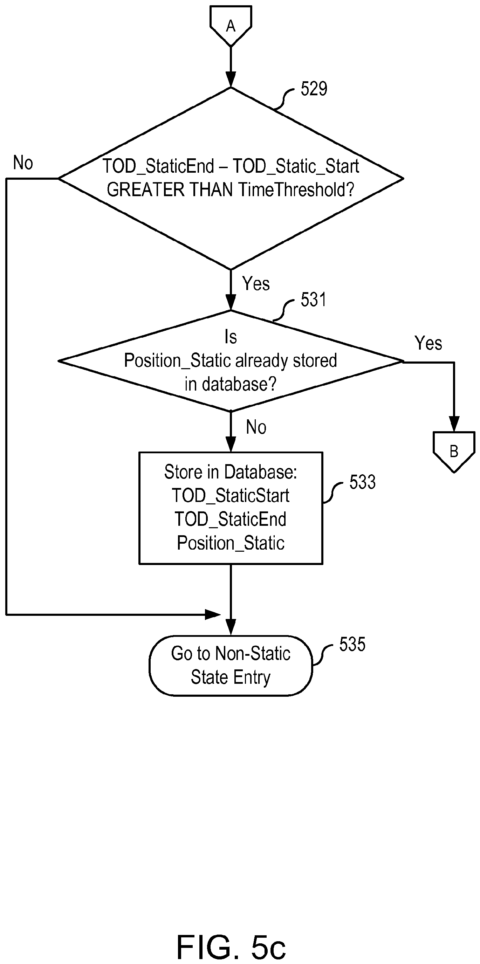

Continuing now with reference to FIG. 5c, a decision is made to determine whether the time spent in this static radio environment is substantial enough to remember for future use (i.e., for it to have an entry in the historical database). In this exemplary embodiment, this decision is made by determining whether the duration of this static radio environment period is longer than a predetermined threshold value ("TimeThreshold") (decision block 529). Suitable values for the predetermined threshold value are application specific. If it is not ("NO" path out of decision block 529), then processing merely needs to return to the Non-Static State entry point (step 535).

If, however, it is decided that the static radio environment that the UE has just departed should have a corresponding entry in the historical database ("YES" path out of decision block 529), then it is first determined whether there is already an entry in the database that corresponds to this geographic location (decision block 531). If not ("NO" path out of decision block 531), then a new entry is made in the database (step 533). In this exemplary embodiment, the entry comprises the geographic location ("Position_Static") and the respective start and end times ("TOD_StaticStart" and "TOD_StaticEnd") that the UE was in this location. Processing then returns to the Non-Static State entry point (step 535).

If the historical database already contains an entry for this particular geographic location ("YES" path out of decision block 531), then further processing is performed to ensure that the most appropriate type of entry is made.

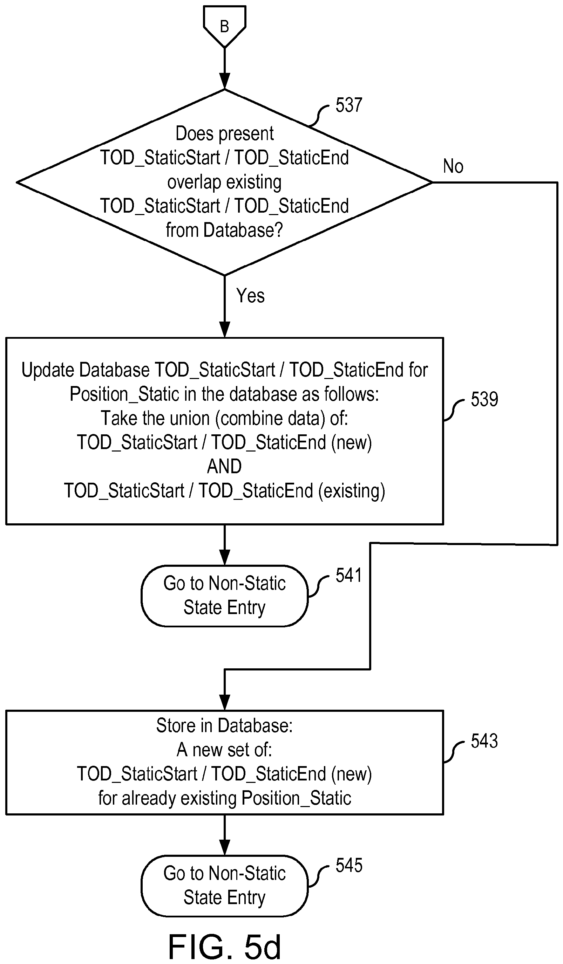

Referring now to FIG. 5d, this processing includes determining whether the start and end times of this most recent static radio environment period overlap an existing start and end time associated with any database entry (decision block 537). If it does ("YES" path out of decision block 537), then the start and end time data is combined into a single entry by, for example, taking the logical union between the new and previously recorded time intervals and storing the result as part of the database entry associated with this geographic location (step 539). Processing then returns to the Non-Static State entry point (step 541).

If this most recent static radio environment period does not overlap an existing start and end time associated with any database entry ("NO" path out of decision block 537), then a new entry is created in the database (step 543). In this exemplary embodiment, the entry comprises storing new start and end times ("TOD_StaticStart" and "TOD_StaticEnd") associated with the already existing entry for this geographic location ("Position_Static") (step 543). Processing then returns to the Non-Static State entry point (step 545).

The various embodiments of the invention provide a very adaptable way of decreasing power consumption in a UE based on user behavior. This provides an advantage over conventional technology in that unnecessary measurements are avoided even in poor radio environments (e.g., assuming that the UE is placed on a table in an environment with weak radio signals during the course of night when the user is sleeping). The quality of the radio environment is not a factor in deciding whether to make frequent measurements. Rather, it is the stability of the radio environment that determines how frequently the UE will measure its surrounding radio environment, where that stability is detected based, at least in part, on historical data about that particular UE.

The invention has been described with reference to particular embodiments. However, it will be readily apparent to those skilled in the art that it is possible to embody the invention in specific forms other than those of the embodiments described above.

For example, the above-described embodiments provided for the historical database to be created in a completely automated way. However, in alternative embodiments, the automatic creation of the data can be supplemented by equipping the UE with a user interface and accompanying logic (e.g., hardwired or programmed processor) that permits the user to interact with the database by adding and/or removing or completely resetting entries within the database.

In still other aspects, means can be provided that permit the database of one UE to be saved and transferred to one or more other UE's. This can be accomplished by, for example, storing the database on a removable memory card. In another example, the database can be communicated by means of a wireless (e.g., Bluetooth® technology) or wired connection between UE's. Providing such a feature enables a user to change to a new UE that will immediately act efficiently based on this particular user's daily habits.

Thus, the described embodiments are merely illustrative and should not be considered restrictive in any way.

## Claims

1. A method of operating a user equipment (200) in a mobile communication system, the method comprising:
ascertaining (403) whether the user equipment (200) is in a static radio environment;
comparing one or more parameters that characterize a changeable state of the user equipment (200) with historical data of the user equipment (200) to determine whether the changeable state of the user equipment (200) presently matches a previously observed changeable state, wherein the one or more parameters that characterize the changeable state of the user equipment (200) include a geographic position of the user equipment (200) or a time of day at a geographic position of the user equipment (200); said method being **characterized by**:
if it is determined (559, 563) that the user equipment (200) is in the static radio environment and that the changeable state of the user equipment (200) presently matches the previously observed changeable state, then repeatedly measuring a surrounding non-serving cell radio environment of the user equipment (200) at a first rate (563);
if it is determined that the user equipment (200) is in the static radio environment and that the changeable state of the user equipment (200) does not presently match the previously observed changeable state (507, 547), then repeatedly measuring the surrounding non-serving cell radio environment of the user equipment (200) at a second rate (549) for a predetermined period of time; and
if it is determined that the user equipment (200) is not in the static radio environment (417, 513), then repeatedly measuring the surrounding non-serving cell radio environment of the user equipment (200) at the second rate (517) for an unrestricted amount of time,
wherein the first rate is lower than the second rate.

2. The method of claim 1, wherein measuring the surrounding non-serving cell radio environment of the user equipment (200) at the first rate continues for a historical duration of time stored in a database unless interrupted by detection (403) that one or more parameters that characterize the changeable state of the user equipment (200) no longer match the historical data of the user equipment (200).

3. The method of claim 1, comprising:
collecting the historical data of the user equipment (200) by performing:
detecting whether the user equipment (200) remained in a static radio environment for at least a duration of time specified by a time threshold (529); and
in response to detecting that the user equipment (200) remained in the static radio environment for at least the duration of time specified by the time threshold, storing information (533) that indicates the user equipment's geographic position, time of day at the geographic position, and duration at which the user equipment (200) remained in the static radio environment.

4. The method of claim 3, wherein storing information that indicates the user equipment's geographic position, time of day at the geographic position, and duration at which the user equipment (200) remained in the static radio environment comprises modifying an existing database entry (539) that corresponds to a same geographic position of the user equipment (200).

5. The method of claim 3, wherein information that indicates the duration at which the user equipment (200) remained in the static radio environment comprises a start time and an end time,
wherein:
the start time represents a time of day at which the user equipment (200) entered the static radio environment; and
the end time represents a time of day at which the user equipment (200) left the static radio environment.

6. The method of claim 3, comprising:
accepting information from a user of the user equipment (200);
using the accepted information to modify the historical data of the user equipment (200).

7. The method of claim 1, comprising:
saving the historical data of the user equipment (200) in a manner that permits the historical data to be available in another user equipment (200).

8. The method of claim 1, comprising:
receiving the historical data from another user equipment (200).

9. The method of claim 1, comprising:
at a time of day and geographic position of the user equipment (200) that corresponds to a historical data entry, detecting that the user equipment (200) is not in the static radio environment, and in response thereto modifying (411, 413, 415) the historical data entry in a historical data database.

10. The method of claim 9, wherein modifying the historical data entry in the historical data database comprises removing the historical data entry from the historical data database.

11. The method of claim 1, comprising:
if it was determined that the user equipment (200) was in the static radio environment and that the changeable state of the user equipment (200) did not presently match the previously observed changeable state, then at a conclusion of the predetermined period of time, repeatedly measuring the surrounding non-serving cell radio environment of the user equipment (200) at the first rate if the user equipment (200) is still in the static radio environment.

12. An apparatus for controlling operation of a user equipment (200) in a mobile communication system, the apparatus comprising:
logic configured to ascertain (403) whether the user equipment (200) is in a static radio environment;
logic configured to compare one or more parameters that characterize a changeable state of the user equipment (200) with historical data of the user equipment (200) to determine whether the changeable state of the user equipment (200) presently matches a previously observed changeable state, wherein the one or more parameters that characterize the changeable state of the user equipment (200) include a geographic position of the user equipment (200) or a time of day at a geographic position of the user equipment (200); said apparatus being **characterized by** further comprising:
logic configured to repeatedly measure a surrounding non-serving cell radio environment of the user equipment (200) at a first rate (563) in response to a determination (559, 563) that the user equipment (200) is in the static radio environment and that the changeable state of the user equipment (200) presently matches the previously observed changeable state;
logic configured to repeatedly measure the surrounding non-serving cell radio environment of the user equipment (200) at a second rate (549) for a predetermined period of time in response to a determination that the user equipment (200) is in the static radio environment and that the changeable state of the user equipment (200) does not presently match the previously observed changeable state (507, 547); and
logic configured to repeatedly measure the surrounding non-serving cell radio environment of the user equipment (200) at the second rate (517) for an unrestricted amount of time in response to a determination that the user equipment (200) is not in the static radio environment (417, 513),
wherein the first rate is lower than the second rate.

13. The apparatus of claim 12, wherein the logic configured to measure the surrounding non-serving cell radio environment of the user equipment (200) at the first rate is configured to operate for a historical duration of time stored in a database unless interrupted by detection (417) that one or more parameters that characterize the changeable state of the user equipment (200) no longer match the historical data of the user equipment (200).

14. The apparatus of claim 12, comprising:
logic configured to collect the historical data of the user equipment (200) by performing:
detecting whether the user equipment (200) remained in a static radio environment for at least a duration of time specified by a time threshold (529); and
in response to detecting that the user equipment (200) remained in the static radio environment for at least the duration of time specified by the time threshold, storing information (533) that indicates the user equipment's geographic position, time of day at the geographic position, and duration at which the user equipment (200) remained in the static radio environment.

15. The apparatus of claim 14, wherein storing information that indicates the user equipment's geographic position, time of day at the geographic position, and duration at which the user equipment (200) remained in the static radio environment comprises modifying an existing database entry (539) that corresponds to a same geographic position of the user equipment (200).

16. The apparatus of claim 14, wherein information that indicates the duration at which the user equipment (200) remained in the static radio environment comprises a start time and an end time,
wherein:
the start time represents a time of day at which the user equipment (200) entered the static radio environment; and
the end time represents a time of day at which the user equipment (200) left the static radio environment.

17. The apparatus of claim 14, comprising:
user interface logic configured to accept information from a user of the user equipment (200);
logic configured to use the accepted information to modify the historical data of the user equipment (200).

18. The apparatus of claim 12, comprising:
logic configured to save the historical data of the user equipment (200) in a manner that permits the historical data to be available in another user equipment (200).

19. The apparatus of claim 12, comprising:
logic configured to receive the historical data from another user equipment (200).

20. The apparatus of claim 12, comprising:
logic configured to detect that the user equipment (200) is not in the static radio environment at a time of day and geographic position of the user equipment (200) that corresponds to a historical data entry, and in response thereto to modify (411, 413, 415) the historical data entry in a historical data database.

21. The apparatus of claim 20, wherein modifying the historical data entry in the historical data database comprises removing the historical data entry from the historical data database.

22. The apparatus of claim 12, comprising:
logic configured to repeatedly measure the surrounding non-serving cell radio environment of the user equipment (200) at the first rate if the user equipment (200) is still in the static radio environment at a conclusion of the predetermined period of time if it was determined that the user equipment (200) was in the static radio environment and that the changeable state of the user equipment (200) did not presently match the previously observed changeable state.

## Patentansprüche

1. Verfahren zum Betreiben einer Benutzereinrichtung (200) in einem Mobilkommunikationssystem, wobei das Verfahren umfasst:
Ermitteln (403), ob die Benutzereinrichtung (200) in einer statischen Funkumgebung ist;
Vergleichen eines oder mehrerer Parameter, die einen veränderlichen Zustand der Benutzereinrichtung (200) kennzeichnen, mit historischen Daten der Benutzereinrichtung (200), um zu bestimmen, ob der veränderliche Zustand der Benutzereinrichtung gegenwärtig einem früher beobachteten veränderlichen Zustand entspricht, wobei der eine oder die mehreren Parameter, die den veränderlichen Zustand der Benutzereinrichtung (200) kennzeichnen, eine geografische Position der Benutzereinrichtung (200) oder eine Tageszeit in einer geografischen Position der Benutzereinrichtung (200) umfassen; wobei das Verfahren **gekennzeichnet ist durch**:
wiederholtes Messen dann, wenn bestimmt wird (559, 563), dass die Benutzereinrichtung (200) in der statischen Funkumgebung ist, und dass der veränderliche Zustand der Benutzereinrichtung (200) gegenwärtig dem früher beobachteten veränderlichen Zustand entspricht, einer umliegenden Funkumgebung nichtversorgender Zellen der Benutzereinrichtung (200) bei einer ersten Rate (563);
wiederholtes Messen dann, wenn bestimmt wird, dass die Benutzereinrichtung (200) in der statischen Funkumgebung ist, und dass der veränderliche Zustand der Benutzereinrichtung (200) gegenwärtig nicht dem früher beobachteten veränderlichen Zustand entspricht (507, 547), der umliegenden Funkumgebung nichtversorgender Zellen der Benutzereinrichtung (200) bei einer zweiten Rate (549) für einen vorbestimmten Zeitraum; und
wiederholtes Messen dann, wenn bestimmt wird, dass die Benutzereinrichtung (200) nicht in der statischen Funkumgebung ist (417, 513), der umliegenden Funkumgebung nichtversorgender Zellen (200) bei der zweiten Rate (517) für einen unbeschränkten Zeitraum,
wobei die erste Rate niedriger als die zweite Rate ist.

2. Verfahren nach Anspruch 1, wobei das Messen der umliegenden Funkumgebung nichtversorgender Zellen der Benutzereinrichtung (200) bei der ersten Rate für eine historische Zeitdauer, die in einer Datenbank gespeichert ist, fortfährt, sofern nicht unterbrochen durch Erkennung (403), dass ein oder mehrere Parameter, die den veränderlichen Zustand der Benutzereinrichtung (200) kennzeichnen, nicht mehr den historischen Daten der Benutzereinrichtung (200) entsprechen.

3. Verfahren nach Anspruch 1, umfassend:
Sammeln der historischen Daten der Benutzereinrichtung (200) durch Durchführen von Folgendem:
Erkennen, ob die Benutzereinrichtung (200) für mindestens eine Zeitdauer, die durch eine Zeitschwelle spezifiziert wird (529) in einer statischen Funkumgebung blieb; und
Speichern in Reaktion auf ein Erkennen, dass die Benutzereinrichtung (200) für mindestens die Zeitdauer, die durch die Zeitschwelle spezifiziert wird, in der statischen Funkumgebung blieb, von Informationen (533), welche die geografische Position der Benutzereinrichtung, die Tageszeit in der geografischen Position und eine Dauer angeben, welche die Benutzereinrichtung (200) in der statischen Funkumgebung blieb.

4. Verfahren nach Anspruch 1, wobei das Speichern von Informationen, welche die geografische Position der Benutzereinrichtung, die Tageszeit in der geografischen Position und eine Dauer angeben, welche die Benutzereinrichtung (200) in der statischen Funkumgebung blieb, ein Modifizieren eines bestehenden Datenbankeintrags umfasst (539), der einer gleichen geografischen Position der Benutzereinrichtung (200) entspricht.

5. Verfahren nach Anspruch 2, wobei die Informationen, welche die Dauer angeben, welche die Benutzereinrichtung (200) in der statischen Funkumgebung blieb, eine Startzeit und eine Endzeit umfassen,
wobei:
die Startzeit eine Tageszeit darstellt, zu welcher die Benutzereinrichtung (200) in die statische Funkumgebung eintrat; und
die Endzeit eine Tageszeit darstellt, zu welcher die Benutzereinrichtung (200) die statische Funkumgebung verließ.

6. Verfahren nach Anspruch 3, umfassend:
Annehmen von Informationen von einem Benutzer der Benutzereinrichtung (200);
Verwenden der angenommenen Informationen, um die historischen Daten der Benutzereinrichtung (200) zu modifizieren.

7. Verfahren nach Anspruch 1, umfassend:
Speichern der historischen Daten der Benutzereinrichtung (200) auf eine Weise, die es ermöglicht, dass die historischen Daten in einer anderen Benutzereinrichtung (200) verfügbar sind.

8. Verfahren nach Anspruch 1:
Empfangen der historischen Daten von einer anderen Benutzereinrichtung (200).

9. Verfahren nach Anspruch 1, umfassend:
Erkennen zu einer Tageszeit und in einer geografischen Position der Benutzereinrichtung (200), die einem historischen Dateneintrag entsprechen, dass die Benutzereinrichtung (200) nicht in der statischen Funkumgebung ist, und in Reaktion darauf Modifizieren (411, 413, 415) des historischen Dateneintrags in einer Datenbank historischer Daten.

10. Verfahren nach Anspruch 9, wobei das Modifizieren des historischen Dateneintrags in der Datenbank historischer Daten ein Entfernen des historischen Dateneintrags aus der Datenbank historischer Daten umfasst.

11. Verfahren nach Anspruch 1, umfassend:
wiederholtes Messen dann, wenn bestimmt wurde, dass die Benutzereinrichtung (200) in der statischen Funkumgebung war, und dass der veränderliche Zustand der Benutzereinrichtung (200) gegenwärtig nicht dem früher beobachteten veränderlichen Zustand entsprach, bei einem Ablauf des vorbestimmten Zeitraums der umliegenden Funkumgebung nichtversorgender Zellen der Benutzereinrichtung (200) bei einer ersten Rate (200), wenn die Benutzereinrichtung (200) noch in der statischen Funkumgebung ist.

12. Vorrichtung zum Steuern des Betriebs einer Benutzereinrichtung (200) in einem Mobilkommunikationssystem, wobei die Vorrichtung umfasst:
Logik, die so konfiguriert ist, dass sie ermittelt (403), ob die Benutzereinrichtung (200) in einer statischen Funkumgebung ist;
Logik, die so konfiguriert ist, dass sie einen oder mehrere Parameter, die einen veränderlichen Zustand der Benutzereinrichtung (200) kennzeichnen, mit historischen Daten der Benutzereinrichtung (200) vergleicht, um zu bestimmen, ob der veränderliche Zustand der Benutzereinrichtung gegenwärtig einem früher beobachteten veränderlichen Zustand entspricht, wobei der eine oder die mehreren Parameter, die den veränderlichen Zustand der Benutzereinrichtung (200) kennzeichnen, eine geografische Position der Benutzereinrichtung (200) oder eine Tageszeit in einer geografischen Position der Benutzereinrichtung (200) umfassen; wobei die Vorrichtung **dadurch gekennzeichnet ist, dass** sie ferner umfasst:
Logik, die so konfiguriert ist, dass sie in Reaktion auf eine Bestimmung (559, 563), dass die Benutzereinrichtung in der statischen Funkumgebung ist, und dass der veränderliche Zustand der Benutzereinrichtung (200) gegenwärtig dem früher beobachteten veränderlichen Zustand entspricht, eine umliegende Funkumgebung nichtversorgender Zellen der Benutzereinrichtung (200) wiederholt bei einer ersten Rate misst (563);
Logik, die so konfiguriert ist, dass sie in Reaktion auf eine Bestimmung (559, 549), dass die Benutzereinrichtung in der statischen Funkumgebung ist, und dass der veränderliche Zustand der Benutzereinrichtung (200) gegenwärtig nicht dem früher beobachteten veränderlichen Zustand entspricht (507, 547), die umliegende Funkumgebung nichtversorgender Zellen der Benutzereinrichtung (200) wiederholt bei einer zweiten Rate misst (549);
Logik, die so konfiguriert ist, dass sie die umliegende Funkumgebung nichtversorgender Zellen der Benutzereinrichtung (200) in Reaktion auf eine Bestimmung, dass die Benutzereinrichtung nicht in der statischen Funkumgebung ist (417, 513), für eine unbeschränkte Zeitdauer bei der zweiten Rate misst (517).
wobei die erste Rate niedriger als die zweite Rate ist.

13. Vorrichtung nach Anspruch 12, wobei die Logik, die so konfiguriert ist, dass sie die umliegende Funkumgebung nichtversorgender Zellen der Benutzereinrichtung (200) bei der ersten Rate misst, so konfiguriert ist, dass sie für eine historische Zeitdauer, die in einer Datenbank gespeichert ist, tätig ist, sofern nicht unterbrochen durch Erkennung (417), dass ein oder mehrere Parameter, die den veränderlichen Zustand der Benutzereinrichtung (200) kennzeichnen, nicht mehr den historischen Daten der Benutzereinrichtung (200) entsprechen.

14. Vorrichtung nach Anspruch 12, umfassend:
Logik, die so konfiguriert ist, dass sie die historischen Daten der Benutzereinrichtung (200) sammelt, indem sie Folgendes durchführt:
Erkennen, ob die Benutzereinrichtung (200) für mindestens eine Zeitdauer, die durch eine Zeitschwelle spezifiziert wird (529), in einer statischen Funkumgebung blieb; und
Speichern in Reaktion auf ein Erkennen, dass die Benutzereinrichtung (200) für mindestens die Zeitdauer, die durch die Zeitschwelle spezifiziert wird, in der statischen Funkumgebung blieb, von Informationen (533), welche die geografische Position der Benutzereinrichtung, die Tageszeit in der geografischen Position und eine Dauer angeben, welche die Benutzereinrichtung (200) in der statischen Funkumgebung blieb.

15. Vorrichtung nach Anspruch 14, wobei das Speichern von Informationen, welche die geografische Position der Benutzereinrichtung, die Tageszeit in der geografischen Position und eine Dauer angeben, welche die Benutzereinrichtung (200) in der statischen Funkumgebung blieb, ein Modifizieren eines bestehenden Datenbankeintrags umfasst (539), der einer geografischen Position der Benutzereinrichtung (200) entspricht.

16. Vorrichtung nach Anspruch 14, wobei die Informationen, welche die Dauer angeben, welche die Benutzereinrichtung (200) in der statischen Funkumgebung blieb, eine Startzeit und eine Endzeit umfassen,
wobei:
die Startzeit eine Tageszeit darstellt, zu welcher die Benutzereinrichtung (200) in die statische Funkumgebung eintrat; und
die Endzeit eine Tageszeit darstellt, zu welcher die Benutzereinrichtung (200) die statische Funkumgebung verließ.

17. Vorrichtung nach Anspruch 14, umfassend:
Benutzerschnittstellenlogik, die so konfiguriert ist, dass sie Informationen von einem Benutzer der Benutzereinrichtung (200) annimmt;
Logik, die so konfiguriert ist, dass sie die angenommenen Informationen verwendet, um die historischen Daten der Benutzereinrichtung (200) zu modifizieren.

18. Vorrichtung nach Anspruch 12, umfassend:
Logik, die so konfiguriert ist, dass sie die historischen Daten der Benutzereinrichtung (200) auf eine Weise speichert, die es ermöglicht, dass die historischen Daten in einer anderen Benutzereinrichtung (200) verfügbar sind.

19. Vorrichtung nach Anspruch 12, umfassend:
Logik, die so konfiguriert ist, dass sie die historischen Daten von einer anderen Benutzereinrichtung (200) empfängt.

20. Vorrichtung nach Anspruch 12, umfassend:
Logik, die so konfiguriert ist, dass sie erkennt, dass die Benutzereinrichtung (200) zu einer Tageszeit und in einer geografischen Position der Benutzereinrichtung, die einem historischen Dateneintrag entsprechen, nicht in der statischen Funkumgebung ist, und in Reaktion darauf den historischen Dateneintrag in einer Datenbank historischer Daten modifiziert (411, 413, 415).

21. Vorrichtung nach Anspruch 20, wobei das Modifizieren des historischen Dateneintrags in der Datenbank historischer Daten ein Entfernen des historischen Dateneintrags aus der Datenbank historischer Daten umfasst.

22. Vorrichtung nach Anspruch 12, umfassend:
Logik, die so konfiguriert ist, dass sie die umliegende Funkumgebung nichtversorgender Zellen der Benutzereinrichtung (200) wiederholt bei der ersten Rate misst, wenn die Benutzereinrichtung (200) bei einem Ablauf des vorbestimmten Zeitraums noch in der statischen Funkumgebung ist, wenn bestimmt wurde, dass die Benutzereinrichtung (200) in der statischen Funkumgebung war, und dass der veränderliche Zustand der Benutzereinrichtung (200) gegenwärtig nicht dem früher beobachteten veränderlichen Zustand entspricht.

## Revendications

1. Procédé de fonctionnement d'un équipement d'utilisateur (200) dans un système de communication mobile, le procédé comprenant :
l'évaluation (403) si l'équipement d'utilisateur (200) se trouve dans un environnement radio statique ;
la comparaison d'un ou plusieurs paramètres caractérisant un état changeable de l'équipement d'utilisateur (200) à des données historiques de l'équipement d'utilisateur (200) pour déterminer si l'état changeable de l'équipement d'utilisateur (200) correspond présentement à un état changeable précédemment observé, dans lequel l'un ou plusieurs paramètres caractérisant l'état changeable de l'équipement d'utilisateur (200) comprennent une position géographique de l'équipement d'utilisateur (200) ou une heure de la journée à une position géographique de l'équipement d'utilisateur (200) ; ledit procédé étant **caractérisé par** :
s'il est déterminé (559, 563) que l'équipement d'utilisateur (200) se trouve dans l'environnement radio statique et que l'état changeable de l'équipement d'utilisateur (200) correspond présentement à l'état changeable précédemment observé, alors la mesure à répétition d'un environnement radio de cellule de non-desserte environnant de l'équipement d'utilisateur (200) à un premier taux (563) ;
s'il est déterminé que l'équipement d'utilisateur (200) se trouve dans l'environnement radio statique et que l'état changeable de l'équipement d'utilisateur (200) ne correspond pas présentement à l'état changeable précédemment observé (507, 547), alors la mesure à répétition de l'environnement radio de cellule de non-desserte environnant de l'équipement d'utilisateur (200) à un deuxième taux (549) pendant une période de temps prédéterminée ; et
s'il est déterminé que l'équipement d'utilisateur (200) ne se trouve pas dans l'environnement radio statique (417, 513), alors la mesure à répétition de l'environnement radio de cellule de non-desserte environnant de l'équipement d'utilisateur (200) au deuxième taux (517) pendant une quantité de temps illimitée,
dans lequel le premier taux est inférieur au deuxième taux.

2. Procédé selon la revendication 1, dans lequel la mesure de l'environnement radio de cellule de non-desserte environnant de l'équipement d'utilisateur (200) au premier taux continue pendant une durée historique mémorisée dans une base de données à moins qu'elle ne soit interrompue par la détection (403) qu'un ou plusieurs paramètres caractérisant l'état changeable de l'équipement d'utilisateur (200) ne correspondent plus aux données historiques de l'équipement d'utilisateur (200).

3. Procédé selon la revendication 1, comprenant :
la collecte des données historiques de l'équipement d'utilisateur (200) par l'exécution de :
la détection si l'équipement d'utilisateur (200) est resté dans un environnement radio statique pendant au moins une durée spécifiée par un seuil de temps (529) ; et
en réponse à la détection que l'équipement d'utilisateur (200) est resté dans l'environnement radio statique pendant au moins la durée spécifiée par le seuil de temps, la mémorisation d'informations (533) indiquant la position géographique de l'équipement d'utilisateur, l'heure de la journée à la position géographique, et la durée pendant laquelle l'équipement d'utilisateur (200) est resté dans l'environnement radio statique.

4. Procédé selon la revendication 3, dans lequel la mémorisation d'informations indiquant la position géographique de l'équipement d'utilisateur, l'heure de la journée à la position géographique, et la durée pendant laquelle l'équipement d'utilisateur (200) est resté dans l'environnement radio statique comprend la modification d'une entrée de base de données existante (539) correspondant à une position géographique identique de l'équipement d'utilisateur (200).

5. Procédé selon la revendication 3, dans lequel les informations indiquant la durée pendant laquelle l'équipement d'utilisateur (200) est resté dans l'environnement radio statique comprennent une heure de début et une heure de fin,
dans lequel :
l'heure de début représente une heure de la journée à laquelle l'équipement d'utilisateur (200) est entré dans l'environnement radio statique ; et
l'heure de fin représente une heure de la journée à laquelle l'équipement d'utilisateur (200) a quitté l'environnement radio statique.

6. Procédé selon la revendication 3, comprenant :
l'acceptation d'informations à partir d'un utilisateur de l'équipement d'utilisateur (200) ;
l'utilisation des informations acceptées pour modifier les données historiques de l'équipement d'utilisateur (200).

7. Procédé selon la revendication 1, comprenant :
l'enregistrement des données historiques de l'équipement d'utilisateur (200) de manière à rendre les données historiques disponibles dans un autre équipement d'utilisateur (200).

8. Procédé selon la revendication 1, comprenant :
la réception des données historiques en provenance d'un autre équipement d'utilisateur (200).

9. Procédé selon la revendication 1, comprenant :
à une heure de la journée et à une position géographique de l'équipement d'utilisateur (200) correspondant à une entrée de données historiques, la détection que l'équipement d'utilisateur (200) n'est pas dans l'environnement radio statique et, en réponse à cela, la modification (411, 413, 415) de l'entrée de données historiques dans une base de données historiques.

10. Procédé selon la revendication 9, dans lequel la modification de l'entrée de données historiques dans la base de données historiques comprend la suppression de l'entrée de données historiques de la base de données historiques.

11. Procédé selon la revendication 1, comprenant :
s'il a été déterminé que l'équipement d'utilisateur (200) se trouve dans l'environnement radio statique et que l'état changeable de l'équipement d'utilisateur (200) ne correspond pas présentement à l'état changeable précédemment observé, alors, à une conclusion de la période de temps prédéterminée, la mesure à répétition de l'environnement radio de cellule de non-desserte environnant de l'équipement d'utilisateur (200) au premier taux si l'équipement d'utilisateur (200) se trouve toujours dans l'environnement radio statique.

12. Appareil de commande de fonctionnement d'un équipement d'utilisateur (200) dans un système de communication mobile, l'appareil comprenant :
une logique configurée pour l'évaluation (403) si l'équipement d'utilisateur (200) se trouve dans un environnement radio statique ;
une logique configurée pour la comparaison d'un ou plusieurs paramètres caractérisant un état changeable de l'équipement d'utilisateur (200) à des données historiques de l'équipement d'utilisateur (200) pour déterminer si l'état changeable de l'équipement d'utilisateur (200) correspond présentement à un état changeable précédemment observé, dans lequel l'un ou plusieurs paramètres caractérisant l'état changeable de l'équipement d'utilisateur (200) comprennent une position géographique de l'équipement d'utilisateur (200) ou une heure de la journée à une position géographique de l'équipement d'utilisateur (200) ; ledit appareil étant **caractérisé en ce qu'**il comprend en outre :
une logique configurée pour la mesure à répétition d'un environnement radio de cellule de non-desserte environnant de l'équipement d'utilisateur (200) à un premier taux (563) en réponse à une détermination (559, 563) que l'équipement d'utilisateur (200) se trouve dans l'environnement radio statique et que l'état changeable de l'équipement d'utilisateur (200) correspond présentement à l'état changeable précédemment observé ;
une logique configurée pour la mesure à répétition de l'environnement radio de cellule de non-desserte environnant de l'équipement d'utilisateur (200) à un deuxième taux (549) pendant une période de temps prédéterminée en réponse à une détermination que l'équipement d'utilisateur (200) se trouve dans l'environnement radio statique et que l'état changeable de l'équipement d'utilisateur (200) ne correspond pas présentement à l'état changeable précédemment observé (507, 547) ; et
une logique configurée pour la mesure à répétition de l'environnement radio de cellule de non-desserte environnant de l'équipement d'utilisateur (200) au deuxième taux (517) pendant une quantité de temps illimitée en réponse à une détermination que l'équipement d'utilisateur (200) ne se trouve pas dans l'environnement radio statique (417, 513),
dans lequel le premier taux est inférieur au deuxième taux.

13. Appareil selon la revendication 12, dans lequel la logique configurée pour la mesure de l'environnement radio de cellule de non-desserte environnant de l'équipement d'utilisateur (200) au premier taux est configurée pour fonctionner pendant une durée historique mémorisée dans une base de données à moins qu'elle ne soit interrompue par la détection (417) qu'un ou plusieurs paramètres caractérisant l'état changeable de l'équipement d'utilisateur (200) ne correspondent plus aux données historiques de l'équipement d'utilisateur (200).

14. Appareil selon la revendication 12, comprenant :
une logique configurée pour la collecte des données historiques de l'équipement d'utilisateur (200) par l'exécution de :
la détection si l'équipement d'utilisateur (200) est resté dans un environnement radio statique pendant au moins une durée spécifiée par un seuil de temps (529) ; et
en réponse à la détection que l'équipement d'utilisateur (200) est resté dans l'environnement radio statique pendant au moins la durée spécifiée par le seuil de temps, la mémorisation d'informations (533) indiquant la position géographique de l'équipement d'utilisateur, l'heure de la journée à la position géographique, et la durée pendant laquelle l'équipement d'utilisateur (200) est resté dans l'environnement radio statique.

15. Appareil selon la revendication 14, dans lequel la mémorisation d'informations indiquant la position géographique de l'équipement d'utilisateur, l'heure de la journée à la position géographique, et la durée pendant laquelle l'équipement d'utilisateur (200) est resté dans l'environnement radio statique comprend la modification d'une entrée de base de données existante (539) correspondant à une position géographique identique de l'équipement d'utilisateur (200).

16. Appareil selon la revendication 14, dans lequel les informations indiquant la durée pendant laquelle l'équipement d'utilisateur (200) est resté dans l'environnement radio statique comprennent une heure de début et une heure de fin,
dans lequel :
l'heure de début représente une heure de la journée à laquelle l'équipement d'utilisateur (200) est entré dans l'environnement radio statique ; et
l'heure de fin représente une heure de la journée à laquelle l'équipement d'utilisateur (200) a quitté l'environnement radio statique.

17. Appareil selon la revendication 14, comprenant :
une logique d'interface utilisateur configurée pour l'acceptation d'informations à partir d'un utilisateur de l'équipement d'utilisateur (200) ;
une logique configurée pour l'utilisation des informations acceptées pour modifier les données historiques de l'équipement d'utilisateur (200).

18. Appareil selon la revendication 12, comprenant :
une logique configurée pour l'enregistrement des données historiques de l'équipement d'utilisateur (200) de manière à rendre les données historiques disponibles dans un autre équipement d'utilisateur (200).

19. Appareil selon la revendication 12, comprenant :
une logique configurée pour la réception des données historiques en provenance d'un autre équipement d'utilisateur (200).

20. Appareil selon la revendication 12, comprenant :
une logique configurée pour la détection que l'équipement d'utilisateur (200) n'est pas dans l'environnement radio statique à une heure de la journée et à une position géographique de l'équipement d'utilisateur (200) correspondant à une entrée de données historiques et, en réponse à cela, la modification (411, 413, 415) de l'entrée de données historiques dans une base de données historiques.

21. Appareil selon la revendication 20, dans lequel la modification de l'entrée de données historiques dans la base de données historiques comprend la suppression de l'entrée de données historiques de la base de données historiques.

22. Appareil selon la revendication 12, comprenant :
une logique configurée pour la mesure à répétition de l'environnement radio de cellule de non-desserte environnant de l'équipement d'utilisateur (200) au premier taux si l'équipement d'utilisateur (200) se trouve toujours dans l'environnement radio statique à une conclusion de la période de temps prédéterminée s'il a été déterminé que l'équipement d'utilisateur (200) se trouve dans l'environnement radio statique et que l'état changeable de l'équipement d'utilisateur (200) ne correspond pas présentement à l'état changeable précédemment observé.
